# EUROPEAN PATENT APPLICATION

(11) **EP 4 796 868 A1**
(43) Date of publication of application: **26.08.2026**
(21) Application number: 25315057.7
(22) Date of filing: 20.02.2025
(51) Int. Cl.: F25B 21/00, H01F 6/04

(54) **NUCLEAR-DEMAGNETIZATION COOLING STAGE AND NUCLEAR-DEMAGNETIZATION REFRIGERATORS**

(71) Applicant: Centre National de la Recherche Scientifique, 75016 Paris (FR)
(72) Inventor: Fefferman, Andrew, 38000 Grenoble (FR); Triqueneaux, Sébastien, 38100 Grenoble (FR); Raba, Matthias, 38000 Grenoble (FR); Butterworth, James, 38600 Fontaine (FR)
(74) Representative: Hautier IP

(57) **Abstract**

The invention is related to a nuclear-demagnetization refrigerator (1) comprising:
• a refrigerant (2) made of a superconducting magnetocaloric material;
• a main coil (5);
• at least a first heat switch (3) thermally coupled to the refrigerant (2), comprising:
• a channel piece (31) made of the same superconducting magnetocaloric material as the refrigerant; and
• a magnetic device (32), such as a coil, distinct from the main coil, configured to apply a magnetic field on the channel piece (31) that is greater than the critical magnetic field of the superconducting magnetocaloric material.

## Description

### TECHNICAL FIELD

The technical field of the invention is related to nuclear-demagnetization cooling stages and refrigerators working in a continuous way, based on nuclear-demagnetization cooling stages.

### PRIOR ART

Nuclear-demagnetization refrigerators (also named "NDR") allow to cool samples down to 1 mK or below. It comprises a cooling stage which comprises a refrigerant, usually made of metal. The refrigerant can be precooled using a pre-cooler stage (also named "precooling stage"), then cooled by nuclear demagnetization. All along the demagnetization process, the refrigerant is thermally coupled to the sample to absorb the remaining heat from it. The precooling stage is generally a continuous refrigerator (for example a dilution refrigerator) that can work continuously and provide a fixed temperature point of about 10 mK.

The cooling stage of a NDR also comprises at least one heat switch and potentially two heat switches. They allow or prevent heat from flowing. Heat switches are usually made of a superconducting material that can switch between a superconducting state and a normal state. In its superconducting state, the material prevents the heat from flowing. In its normal state, the material allows heat to flow. Each extremity of the refrigerant is usually thermally coupled to a heat switch. So, the heat switches can couple the refrigerant to or uncouple the refrigerant from the sample or the precooling stage.

Each heat switch is usually connected to the refrigerant using a good conducting material such as copper. For example, a copper ribbon is connected to one side of the refrigerant and welded to the heat switch. The copper ribbon stands in a normal state and allows heat to flow. Using a good conducting material such as copper also allows to relocate the heat switches far from the refrigerant.

In conventional nuclear-demagnetization refrigerators, the cooling stage is usually single-shot. It means that at some point, the sample has to be warmed back to the pre-cooling temperature before being cooled again. In contrast, continuous nuclear-demagnetization refrigerators (also named "CNDR") provide a way to work in continuous operation, without the need to warm up the sample. They involve two cooling stages operating in parallel. The precooled refrigerant of a cooling stage is first thermally uncoupled from the precooling stage, using a first heat switch, then demagnetized to reduce its temperature. Then, when its temperature is low enough, thermally coupled to the sample, using a second heat switch. It is finally recoupled to said precooling stage, using the first heat switch, to transfer the heat absorbed from the sample (this latter step is called "recycling"). While the refrigerant of the first stage is recycled, the refrigerant of another cooling stage can be demagnetized to absorb heat from the sample and so on.

To allow better operation of such refrigerators, a better cooling power is expected. Therefore, it exists a need to provide a nuclear-demagnetization refrigerator with a higher cooling power.

### SUMMARY OF THE INVENTION

The invention solves the technical problem by reducing the number of interfaces in the thermal path to the precooling stage.

The invention concerns a cooling stage for nuclear-demagnetization refrigerator comprising:
- a refrigerant comprising a magnetocaloric material, said magnetocaloric material being a superconductor and having a critical magnetic field;
- a main coil surrounding at least a central part of the refrigerant; and
- at least a first heat switch comprising:
   - a channel piece comprising the same magnetocaloric material as the refrigerant; and
   - a magnetic device, distinct from the main coil, configured to apply a magnetic field on the channel piece of the first heat switch, said magnetic field being greater than the critical magnetic field of the magnetocaloric material,
- a second heat switch comprising:
   - a channel piece comprising the same magnetocaloric material as the refrigerant; and
   - a magnetic device, distinct from the main coil, configured to apply a magnetic field on the channel piece of the second heat switch, said magnetic field being greater than the critical magnetic field of the magnetocaloric material.

The channel piece of the first heat switch, the channel piece of the second heat switch and the refrigerant form a continuous magnetocaloric material.

A magnetocaloric material is a material wherein nuclei can be efficiently used in demagnetization, forming a refrigerant providing a high cooling power. In the invention, the magnetocaloric material is also able to exhibit superconducting state (the magnetocaloric material can be a type I or type II superconducting material). Therefore, the magnetocaloric material can be used as heat switch. When in its normal state, the magnetocaloric material allows heat to flow in the channel pieces of heat switches. However, when in its superconducting state, it prevents heat from flowing in the channel pieces. The magnetocaloric material can be used as heat switches to thermally couple the refrigerant to or uncouple the refrigerant from (depending on its state) a precooling stage and/or a sample holder.

Using the same material to form the refrigerant and the channel pieces of the heat switches allows to form a continuous material to remove any interface between the refrigerant and the heat switches, resulting in a cooling stage having a higher cooling power.

Moreover, because the usual copper strip or ribbon is removed, the cooling stage is more compact and thermally optimized.

The invention also concerns a nuclear-demagnetization refrigerator (also named "NDR") comprising at least a first cooling stage according to the invention. In an embodiment, the nuclear-demagnetization refrigerator can comprise a second cooling stage according to the invention, the first and second cooling stages being thermally coupled in series.

The invention also concerns a continuous nuclear-demagnetization refrigerator (also named "CNDR") comprising at least a first cooling stage according to the invention and a second cooling stage according to the invention, the first and second cooling stages being thermally coupled in parallel.

The continuous nuclear-demagnetization refrigerator can use one of the cooling stages while the other one is being recycled. Thanks to the lower number of interfaces in the heat path, the cooling power of such CNDR is higher than CNDR of the prior art.

The CNDR of the invention is also more compact compared to prior art.

The invention also concerns a use of a continuous nuclear-demagnetization refrigerator according to the invention for cooling down the sample holder of the continuous nuclear-demagnetization.

### BRIEF DESCRIPTION OF THE FIGURES

Figure 1 shows a first embodiment of a nuclear-demagnetization refrigerator according to the invention.
Figure 2 shows a second embodiment of a nuclear-demagnetization refrigerator according to the invention.
Figure 3 shows a third embodiment of a nuclear-demagnetization refrigerator according to the invention.
Figure 4 shows an embodiment of a refrigerant and an aluminum piece according to the invention, that can be implemented in the refrigerator of figures 2 and 3.
Figure 5 shows an embodiment of a continuous nuclear-demagnetization refrigerator according to the invention, based of nuclear-demagnetization refrigerators as shown in figure 1.
Figure 6 shows an example of using an embodiment of a continuous nuclear-demagnetization refrigerator according to the invention to cool down its sample holder.

The figures are given by way of example and are not restrictive of the invention. They are schematic representations of the principle intended to facilitate understanding of the invention and are not necessarily on the scale of practical applications. The figures are not representative of reality.

### DETAILLED DESCRIPTION

Beneficially, the refrigerant extends between a first extremity and a second extremity, along a main extension direction, the first heat switch, and preferably the channel piece of the first heat switch, being placed on a first side of the refrigerant along the main extension direction of the refrigerant and the second heat switch, and preferably the channel piece of the second heat switch, being placed on second side of the refrigerant along the main extension direction. Beneficially, the magnetic device of the first heat switch is a magnetic coil surrounding the channel piece of the first heat switch.

Beneficially, the magnetic device of the first heat switch is a superconducting tube surrounding the channel piece of the first heat switch, said superconducting tube being configured to trap a magnetic field greater than the critical magnetic field of the magnetocaloric material.

Beneficially, the superconducting tube surrounding the channel piece of the first heat switch is based on, and preferably made of, NbTi.

Beneficially, the first heat switch comprises a complementary coil configured to generate the magnetic field trapped by the superconducting tube.

Beneficially, the refrigerant comprises a bundle of wires of magnetocaloric material, or bundled plates of magnetocaloric material, or a porous magnetocaloric material block, or a magnetocaloric material block comprising holes or slots.

Beneficially, the refrigerant comprises a bundle of wires of magnetocaloric material, or plates of magnetocaloric material, the channel piece of the first heat switch being at least one of the wires or the plates from said bundle of the refrigerant, extending out of said bundle.

Beneficially, the said at least one wire or plate extending out of said bundle comprises a bend with a portion perpendicular to a direction of the magnetic field applied by the magnetic device of the first heat switch and preferably centered in the magnetic device of the first heat switch.

Beneficially, the channel piece of the second heat switch is at least one of the wires or the plates from the bundle of the refrigerant, extending out of said bundle.

Beneficially, the said at least one wire or plate of the channel piece of the second heat switch, comprises a bend with a portion perpendicular to a direction of the magnetic field applied by the magnetic device of the second heat switch and preferably centered in the magnetic device of the second heat switch.

Beneficially, the magnetic device is also configured to compensate the magnetic field generated by the main coil on the channel piece of the first heat switch.

Beneficially, the channel piece of the first heat switch is thermally coupled to a pre-cooling system, said pre-cooling system being preferably configured to provide a temperature below 20 mK.

Beneficially, the continuous nuclear-demagnetization refrigerator according to the invention comprises a sample holder and a pre-cooling stage, the first heat switch of the first cooling stage being thermally coupled to the precooling stage, the second heat switch of the first cooling stage being thermally coupled to the sample holder, the first heat switch of the second cooling stage being thermally coupled to the precooling stage, the second heat switch of the second cooling stage being thermally coupled to the sample holder.

Beneficially, in the use of the sample holder, starting from an initial state wherein the refrigerant of the first cooling stage is:
- thermally uncoupled from the precooling stage by the first heat switch of the first cooling stage; and
- thermally coupled to the sample holder by the second heat switch of the first cooling stage,

and wherein the refrigerant of the second cooling stage is:
   - thermally coupled to the precooling stage by the first heat switch of the second cooling stage; and
   - thermally uncoupled from the sample holder by the second heat switch of the second cooling stage,
   comprising :
   - while performing a nuclear demagnetization of the refrigerant of the first cooling stage using the main coil of the first cooling stage:
      - thermally uncoupling the refrigerant of the second cooling stage from the precooling stage using the first heat switch of the second cooling stage; and
      - thermally coupling the refrigerant of the second cooling stage to the sampler holder using the second heat switch of the second cooling stage;
   - while performing a nuclear demagnetization of the refrigerant of the second cooling stage using the main coil of the second cooling stage:
      - thermally uncoupling the refrigerant of the first cooling stage from the sample holder using the second heat switch of the first cooling stage;
      - thermally coupling the refrigerant of the first cooling stage to the precooling stage using the first heat switch of the first cooling stage.

An element "based on" a material is understood to mean an element comprising this material alone or an alloy based on this material (therefore comprising at least another material).

For purposes of this disclosure, 'A and/or B' means (A), (B), or (A and B). For purposes of this disclosure, the term 'A, B and/or C' means (A), (B), (C), (A and B), (A and C), (B and C), or (A, B and C).

A magnetocaloric material is a material having a non-zero nuclear spin.

A magnetocaloric material has preferably a high thermal conductivity such as greater than 0.01 W/m/K below 10 mK or even greater than 0.1 W/m/K below 10 mK.

A superconductor is a material able to switch between a superconducting state and a normal state. A superconducting state of a material is a state where electrical resistance vanishes and magnetic fields are expelled from the material. A normal state (or "conducting state") of a material is a state where electrical resistance is non zero.

A critical magnetic field of a superconductor is a magnetic field beyond which the superconductor switch to its normal state (or below which the superconductor switch to its superconducting state). By "two parts forming a continuous material (such as a continuous magnetocaloric material) is meant two parts that are directly connected together forming a unique piece of material without interface. Parts forming a continuous material can be parts directly connected together using a connection element continuously made of the same material, such as a welding element. The parts can be made from the same initial continuous element.

By "channel" is meant a piece configured to form a heat path.

By "thermally coupled" is meant having a heat path formed between two or more elements, the thermal conductivity of said heat path being greater than 0.01 W/m/K below 10 mK and preferably greater than 0.1 W/m/K or 0.2 W/m/K below 10 mK.

By "thermally uncoupled" is meant having no heat path formed between two or more elements or a heat path formed between said two or more elements with a thermal conductivity of said heat path being smaller than 0.01 W/m/K below 10 mK and preferably smaller than 10-3 W/m/K or 10-4 W/m/K.

By "a heat switch thermally coupled to an element" is meant that the heat switch is connected to this element in a way to: let heat circulate when the heat switch is in its normal state, and prevent heat from circulating when the heat switch is in its superconducting state.

A reference frame will be used in which the transverse or right/left direction corresponds to the X axis the longitudinal or back/forward direction corresponds to the Y axis and the vertical or down/up direction corresponds to the Z axis.

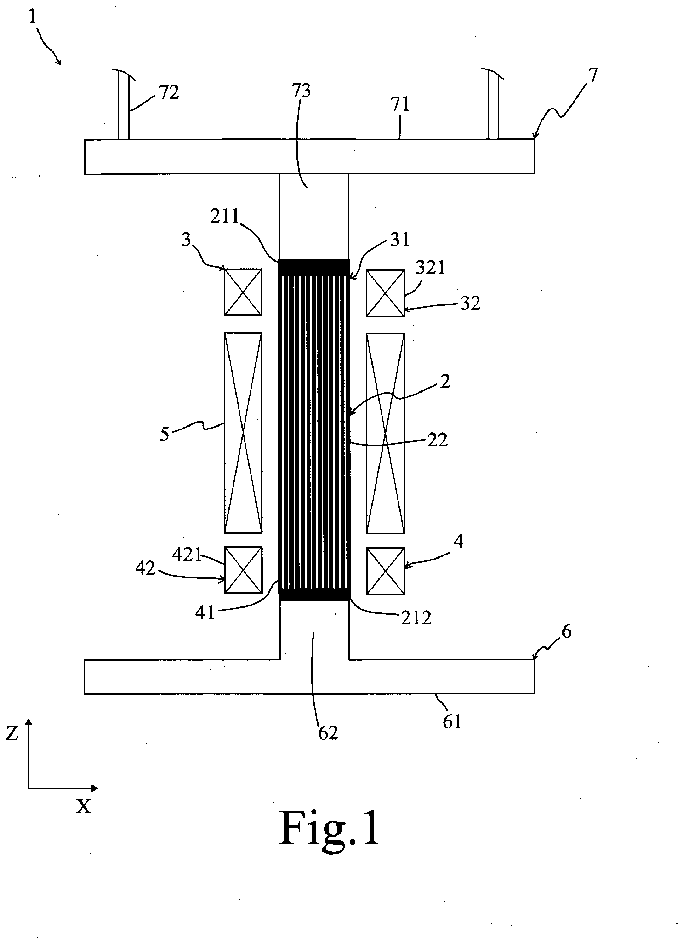

Figures 1, 2 and 3 show three embodiments of a cooling stage 1 according to the invention that can be used in a nuclear-demagnetization refrigerator (also called NDR). Common features of the cooling stage 1 and the NDR will be described below.

First, the cooling stage 1 comprises a refrigerant 2 and a main coil 5. The role of the main coil 5 is to demagnetize the nuclei of the refrigerant 2 in order to lower the internal energy of the refrigerant 2 and reduce its temperature. Therefore, the combination of the refrigerant 2 and the main coil 5 can be used to cool down a sample holder 6.

The NDR comprises a sample holder 6 or sample plate which is intended to hold a sample and to reach the lower temperature of the system. The sample holder 6 can be made of copper.

The NDR can also comprise a precooling stage 7 (also named "precooling system"). Its role is to provide a stable temperature, for example at a plate 71, which can be used as a heat sink by the cooling stage 1. The precooling plate 71 (also simply called "heat sink" or "heat sink plate") is connected to other parts of the precooling system 7 (not shown on the figures). The pre-cooling system 7 is preferably configured such that the heat sink 71 can reach a stable temperature below 20 mK.

The refrigerant 2 of the cooling stage 1 has preferably a cylindrical shape. It extends along a main extension direction Z, between a first extremity 211 and a second extremity 212. The refrigerant 2 can be about 5 cm to 15 cm tall (measured along the main extension direction, which is the Z direction) or even taller and 2 cm to 5 cm diameter (along the X direction, perpendicular to the Z direction) or even larger. A refrigerant having a ratio comprised between 5 cm by 2 cm and 15 cm by 5 cm can provide a cooling power of a few tens of nW at 1 mK. The refrigerant 2 is made of a magnetocaloric material such as aluminium, (for example aluminium with 100 parts per million (ppm) impurity concentration; it limits eddy current heating without excessively decreasing the thermal conductivity of the refrigerant). Alternatively, it can be made of any metal having a non-zero nuclear spin. It can also be made using an alloy of aluminium intended for nuclear demagnetization.

The refrigerant 2 can comprise a bundle of wires 22 or plates made of a magnetocaloric material such as aluminium or an alloy of aluminium. Each wire 22 or plate extends along the main extension direction Z. A bundle of wires 22 or plates reduces the amount of eddy current when a magnetic field is applied on the refrigerant 2. Alternatively, to reduce the eddy current, the refrigerant 2 can comprise a porous magnetocaloric material block such as a porous aluminium block. The refrigerant 2 can comprise an magnetocaloric material block with a cylindrical shape.

In this case, the block has holes or slots 23 to reduce the eddy currents.

The main coil 5 surrounds at least a central part of the refrigerant 2. The main coil 5 is for example 10 cm tall (along the Z direction) and 3 cm large. It has an inner hole wherein the central part of the refrigerant 2 lies.

The cooling stage comprises two heat switches 3, 4 that are intended to thermally couple the refrigerant 2 to, respectively, the precooling stage 7 and the sample holder 6.

The first heat switch 3 can be located on a first side of the refrigerant 2 along the main extension direction Z, for example the side of the first extremity 211 of the refrigerant 2. The second heat switch 4 can be located on a second side of the refrigerant 2, for example the side of the second extremity 212.

The first heat switch 3 is configured to provide a path that the heat can flow through. This path can be formed by a channel piece 31. It is made of the same magnetocaloric material as the refrigerant.

To allow the channel piece 31 of the first heat switch 3 to behave as a heat switch, the magnetocaloric material used (for the first heat switch 3 and the refrigerant 2) is also a superconductor. This way, the channel piece 31 can switch between a normal state and a superconducting state. At a temperature lower than a critical temperature and magnetic field lower than a critical magnetic field, the channel piece 31 is in its superconducting state. Overcoming the critical temperature or overcoming the critical magnetic field results in a switching to the normal state (also called "quenching"). Heat can flow through the channel piece 31 in its normal state. However, heat flow is blocked in the channel piece 31 in its superconducting state. Therefore, controlling the state of the channel piece 31 allows to control the flow of heat through the first heat switch 3.

The channel piece 31 of the first heat switch 3 is for example connected to the precooling system 7, for example to the plate 71 that acts as a heat sink. By "connected" is meant thermally coupled. In its normal state, the channel piece 31 allows heat to flow to the precooling system 7. Therefore, the refrigerant 2 is thermally coupled to the precooling system 7. In its superconducting state, the channel piece 31 blocks the heat flow. In other words, the refrigerant 2 is thermally uncoupled from the precooling system 7.

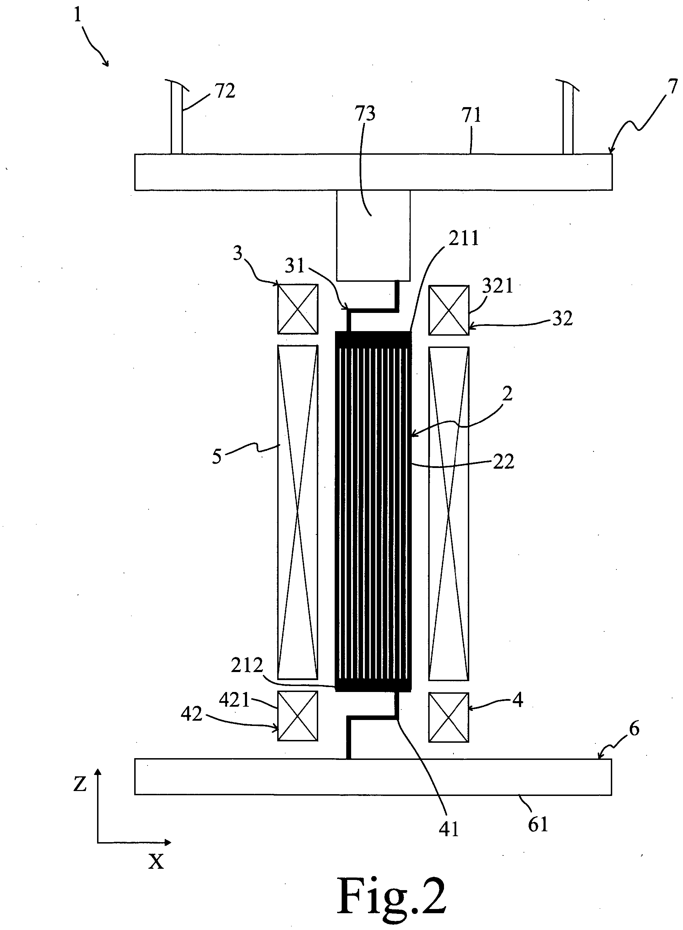

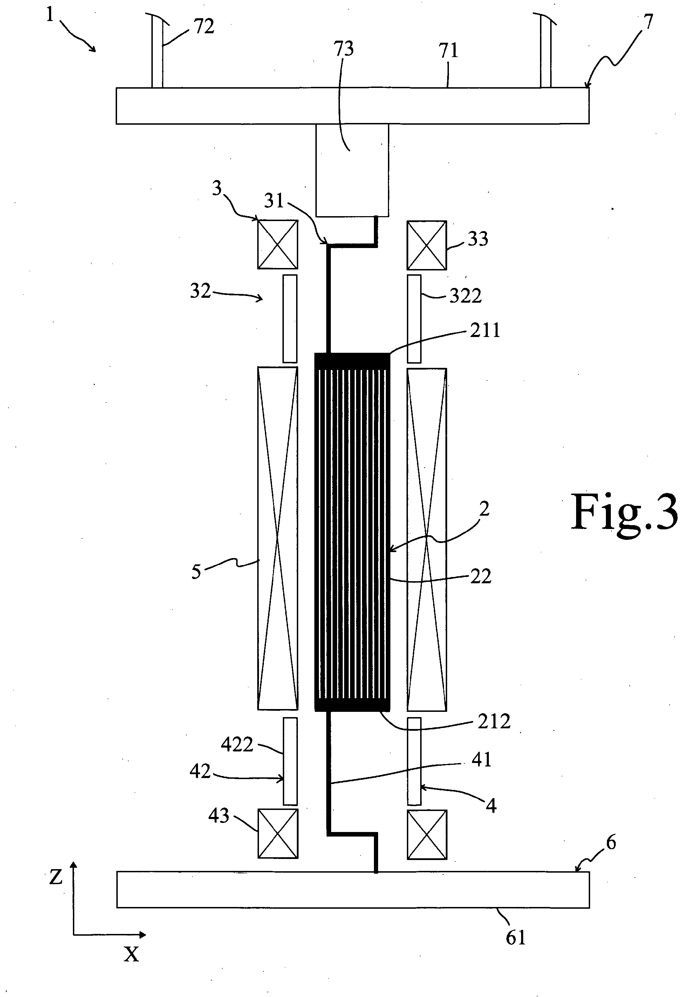

The first heat switch 3 also comprises a magnetic device 32. In the figures 1 and 2, it is a magnetic coil 321, distinct from the main coil 5. In the figure 3, it includes a superconducting tube 322, configured to trap magnetic field. The magnetic device 32 is configured to apply a magnetic field on the channel piece 31 of the first heat switch 3. By controlling the amplitude of the magnetic field applied on the channel piece 31, it is possible to control the state of the superconducting magnetocaloric material. When the magnetic field applied is greater than the critical magnetic field of the superconducting magnetocaloric material, it switches to its normal state. The channel piece 31 allows heat to flow through. The refrigerant 2 is therefore coupled to the precooling system 7. When the magnetic field applied is lower than the critical magnetic field, the superconducting magnetocaloric material stays superconducting and the refrigerant 2 says uncoupled from the precooling system 7.

The magnetic field applied to the channel piece 31 of the first heat switch 3 can comprise the magnetic field radiated from the main coil 5. Therefore, the magnetic device 32 is preferably configured to control the state of the channel piece 31 whatever the operating field radiated by the main coil 5. For example, the magnetic device 32 can add, or reduce, enough magnetic field to keep the resulting magnetic field above, or below, the critical magnetic field of the superconducting magnetocaloric material (therefore of the channel piece 31).

In an embodiment, the magnetic device 32 can be configured to compensate the magnetic field radiated by the main coil 5. Therefore, the magnetic device 32 allows to keep the channel piece 31 in its superconducting state.

The NDR 1 is remarkable in that it is built in a way to minimise the number of interfaces between the refrigerant 2 and the precooling system 7. The channel piece 31 of the first heat switch 3 and the refrigerant 2 are configured to form a continuous material, such as a one piece of superconducting magnetocaloric material.

When the refrigerant 2 is a bundle made of wires 22 or plates of superconducting magnetocaloric material, the channel piece 31 is for example one of the wires 22 or the plates that extends out of the bundle of the refrigerant 2. It can be made of only one wire 22 or plate or a plurality of wires 22 or plates.

The wires 22 can be welded together at each end of the bundle. The wires 22 extending out of the bundle can pass through the weld. However, if they are melted during the welding, the wires 22 extending out of the bundle can be the wires 22 extending from the weld at the end of the bundle.

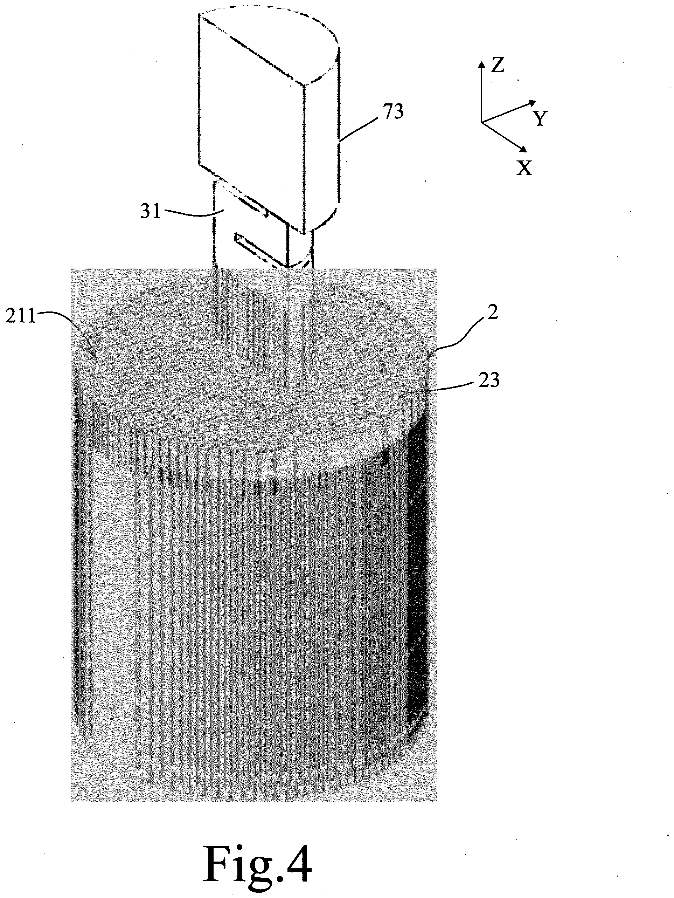

Figure 4 show an example of a refrigerant 2 being made from a body of superconducting magnetocaloric material wherein narrow slots 23 are cut into it. In this case, the channel piece 31 of the first heat switch 3 is also cut into the body of superconducting magnetocaloric material. No welding is required to connect the channel piece 31 to the refrigerant 2 as they are parts from the same initial body. A part of the refrigerant, forming plates, extends along the Z direction, out of the refrigerant

When the refrigerant 2 comprises a block of porous superconducting magnetocaloric material or bulky block of superconducting magnetocaloric material with holes or slots in it, the channel piece 31 can be a distinct piece welded onto the block. It is better that the welding is performed without any added material to keep a good continuity of the superconducting magnetocaloric material. Back to figures 1, 2 and 3, the second heat switch 4 is configured to provide the same kind of behaviour as the first heat switch 3. For example, it comprises a channel piece 41 able to switch between a normal state and a superconducting state. It is made of the same superconducting magnetocaloric material as the refrigerant 2 and the first heat switch 3.

The channel piece 41 of the second heat switch 4 is, for example, thermally coupled to the sample holder 6. In its normal state, the channel piece 41 allows heat to flow from the sample holder 6. Therefore, the refrigerant 2 is thermally coupled to the sample holder 6. In its superconducting state, the channel piece 41 blocks the heat flow. In other words, the refrigerant 2 is thermally uncoupled from the sample holder 6.

Similarly to the first heat switch 3, the second heat switch 4 also comprises a magnetic device 42. In the figures 1 and 2, it is also a magnetic coil 421, distinct for the main coil 5. In the figure 3, it is a superconducting tube 422, configured to trap magnetic field. This magnetic device 42 can be of the same type as the magnetic device 32. It can also be of a different type. For example, one 32 can implement a magnetic coil 321 while the other one 42 can implement a superconducting tube 422.

The magnetic device 42 is configured to apply a magnetic field on the channel piece 41 of the second heat switch 4 to control the state of the channel piece 41 of the second heat switch 4.

The magnetic field applied to the channel piece 41 of the second heat switch 4 can also comprise the magnetic field radiated from the main coil 5. Therefore, the magnetic device 42 can be configured to control the magnetic field on the channel piece 41. For example, it can compensate the field radiated by the main coil 5.

The channel piece 41 of the second heat switch 4 and the refrigerant 2 are configured to form a continuous material. As well as the piece 31 of the first heat switch 3, the channel piece 41 of the second heat switch 4 can be formed by at least one of the wires 22 or the plates that extends out of the bundle of the refrigerant 2. The wires 22 or the plates can extend from a weld at the end of the refrigerant 2 (in case the wires of the plates are welded together). The channel piece 41 can also be made of a plurality of wires 22 or plates welded to the block (especially when the block is porous).

In the figure 1, the channel pieces 31, 41 of both heat switches 3, 4 are a part of the refrigerant 2 itself. The magnetic devices 32, 42 of the first and second heat switch 3, 4 are magnetic coils 321, 421 that each surrounds a end part of the refrigerant 2. The main coil 5 surrounds a central part of the refrigerant 2. Two parts of the refrigerant 2 extend out of the main coil 5. The magnetic coils 321, 421 of the heat switches 3, 4 are located at each side of the main coil 5 to surround the end parts of the refrigerant 2 that extends out of the main coil 5.

In figure 2, the channel pieces 31, 41 of both heat switches 3, 4 are wires 22 extending out of the bundle of the refrigerant 2. The magnetic devices 32, 42 of the first and second heat switch 3, 4 are also magnetic coils 321, 421 that each surround the wires extending out of the refrigerant 2. The main coil 5 can surround the whole refrigerant 2. It facilitates the way to control the magnetic field applied on each channel pieces 31, 41.

The wires forming the pieces 31, 41 comprise a bent portion in a way that the wires extend perpendicularly to the direction of the magnetic field applied by the coils 321, 421. It reduces the risks to trap electronic vortices in the wires while in their superconducting state.

In figure 3, the magnetic devices 32, 42 differ from the ones shown in the figure 2 in that they comprise superconducting tube 322, 422 surrounding the channel pieces 31, 41. They can be made of NbTi. Magnetic field applied to the superconducting tube 322, 422 can induce eddy currents that hold as far as the tube stay superconducting. This way, the superconducting tube 322, 422 can trap magnetic field to apply said magnetic field to the channel pieces 31, 41. The trapped magnetic field can be generated by the main coil 5. The magnetic devices 32, 42 can comprise additional coils 33, 43 to generate the field to trap in the superconducting tube 322. 422 or to control the superconducting state of the superconducting tube 322, 422. The additional coils 33, 43 can also be used to toggle the heat switches 3, 4. During the toggling, the field applied by the additional coils 33, 43 can be trapped by the superconducting tubes 322, 422, keeping the heat switches 3, 4 in their last toggled state.

In an embodiment of the cooling stage 1, the heat switches 3, 4 are placed on the same side of the refrigerant 2. They can be formed by two distinct bundles of wires or plates that extends from the same end part of refrigerant 2. Each bundle wire or plate is therefore surrounded by a magnetic device 32, 42. Having heat switches 3, 4 on the same side of the refrigerant 2 makes inserting said refrigerant 2 in the main coil 5 easier.

The cooling stage 1 as discussed above can be implemented in a nuclear-demagnetization refrigerator (NDR). For example, the NDR can comprise two cooling stages 1 as described above (such as the one described in figure 1). They can be thermally coupled in series. It means that the first heat switch 3 of the first cooling stage 1 is thermally coupled to the second heat switch 4 of the second cooling stage 1. The first cooling stage 1 can be coupled to a sample holder 6 while the other one can be coupled to a pre-cooling system 7. Beneficially, the first heat switch 3 of the first cooling stage 1 and the second heat switch 4 of the second cooling stage 1 can form a single heat switch.

One stage of the stages coupled in series can be used to pre-cool the other stage so as to achieve the lowest possible temperature.

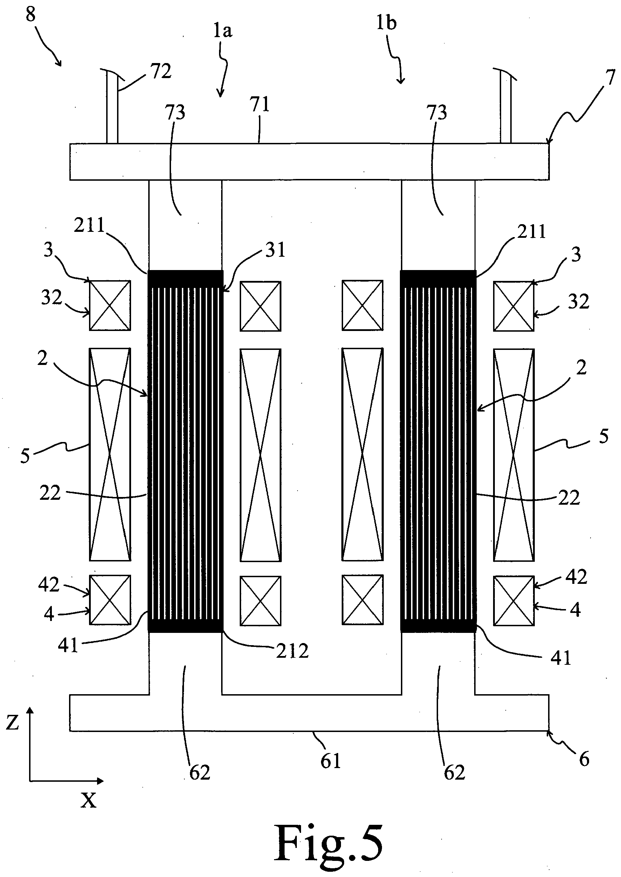

The figure 5 shows an embodiment of a continuous nuclear-demagnetization refrigerator 8 ("CNDR") according to the invention, implementing two cooling stages 1a, 1b as shown in figure 1. The cooling stages 1a, 1b are thermally coupled in parallel. In this example, they are both coupled, on one side, to the precooling system 7, and, on the other side, to the sample holder 6. For example, the first heat switches 3 of the first and second cooling stages 1a, 1b are thermally coupled to the precooling stage 7. The second heat switches 4 of the first and second cooling stage 1a, 1b are thermally coupled to the sample holder 6.

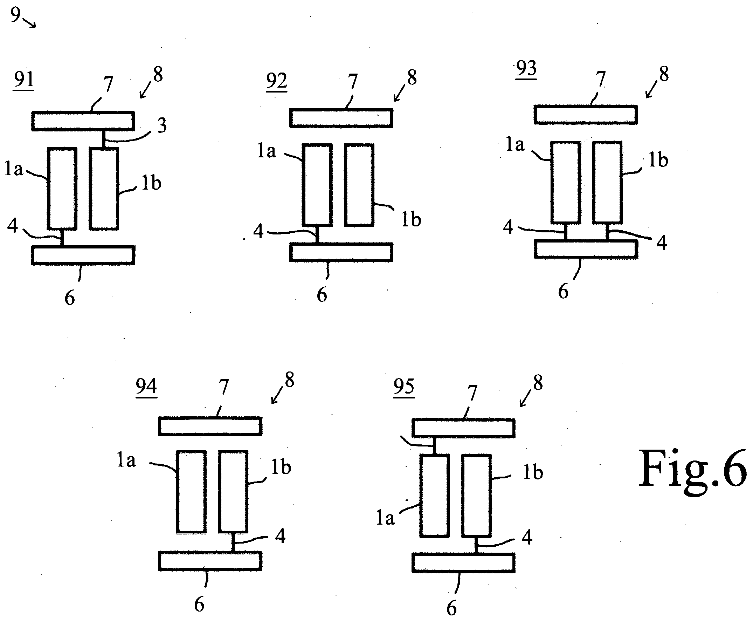

Figure 6 shows an example of method 9 to cool down the sample holder 6 of the CNDR 8. In this method, one cooling stage is used to cool down the sample holder while the other one is recycled. The different steps shown only represent half of a full cycle. To perform a full cycle, one only needs to consider the initial state 91 as a switch of a final state obtain after the final step 95.

In the initial state 91, the refrigerant 2 of the first cooling stage 1a is:
- thermally uncoupled from the precooling stage 7 by the first heat switch 3 of the first cooling stage 1a; and
- thermally coupled to the sample holder 6 by the second heat switch 4 of the first cooling stage 1a.

The refrigerant 2 of the second cooling stage 1b is:
- thermally coupled to the precooling stage 7 by the first heat switch 3 of the second cooling stage 1b; and
- thermally uncoupled from the sample holder 6 by the second heat switch 4 of the second cooling stage 1b.

In a first part of a full cycle, the refrigerant 2 of the first cooling stage 1a is demagnetized to pump the heat from the sample holder 6. During this phase, the refrigerant 2 of the second cooling stage 1b is recycled by being cool down thanks to the precooling stage 7. After the recycling, the refrigerant 2 of the second cooling stage 1b is thermally uncoupled 92 from the precooling stage 7 using the first heat switch 3 of the second cooling stage 1b. At this step, the second cooling stage 1b is isolated. Then, the refrigerant 2 of the second cooling stage 1b is thermally coupled 93 to the sampler holder 6 using the second heat switch 4 of the second cooling stage 1b. Both refrigerants 2 are coupled to the sample holder 6.

The refrigerant 2 of the first cooling stage 1a needs to be recycled. During the recycling, the refrigerant 2 of the second cooling stage 1b is demagnetized using the main coil 5 to cool down the sample holder 6.

To recycle the refrigerant 2 of the first cooling stage 1a, it is first thermally uncoupled 94 from the sample holder 6 using the second heat switch 4 of the first cooling stage 1a. Then, it is thermally coupled 95 to the precooling stage 7 using the first heat switch 3 of the first cooling stage 1a. To continue operating in a continuous manner, one needs to swap the steps between the two cooling stages 1a, 1b.

## Claims

1. A cooling stage for nuclear-demagnetization refrigerator (1) comprising:
• a refrigerant (2) comprising a magnetocaloric material, said magnetocaloric material being a superconductor and having a critical magnetic field;
• a main coil (5) surrounding at least a central part of the refrigerant (2); and
• at least a first heat switch (3) comprising:
• a channel piece (31) comprising the same magnetocaloric material as the refrigerant (2); and
• a magnetic device (32), distinct from the main coil, configured to apply a magnetic field on the channel piece (31) of the first heat switch (3), said magnetic field being greater than the critical magnetic field of the magnetocaloric material,
• a second heat switch (4) comprising:
• a channel piece (41) comprising the same magnetocaloric material as the refrigerant (2); and
• a magnetic device (42), distinct from the main coil (5), configured to apply a magnetic field on the channel piece (41) of the second heat switch (4), said magnetic field being greater than the critical magnetic field of the magnetocaloric material,
the cooling stage being **characterised in that** the channel piece (31) of the first heat switch (3), the channel piece (41) of the second heat switch and the refrigerant (2) form a continuous magnetocaloric material.

2. Cooling stage (1) according to the preceding claim, wherein the refrigerant (2) extends between a first extremity (211) and a second extremity (212), along a main extension direction (Z), the first heat switch (3) being placed on a first side of the refrigerant (2) along the main extension direction (Z) of the refrigerant (2) and the second heat (4) switch being placed on second side of the refrigerant (2) along the main extension direction (Z).

3. Cooling stage (1) according to any one of claims 1 to 2, wherein the magnetic device (32) of the first heat switch (3) is a magnetic coil (321) surrounding the channel piece (31) of the first heat switch (3).

4. Cooling stage (1) according to any one of claims 1 to 2, wherein the magnetic device (32) of the first heat switch (3) is a superconducting tube (322) surrounding the channel piece (31) of the first heat switch (3), said superconducting tube (322) being configured to trap a magnetic field greater than the critical magnetic field of the magnetocaloric material.

5. Cooling stage (1) according to the previous claim, wherein the superconducting tube (322) surrounding the channel piece (31) of the first heat switch (3) is based on, and preferably made of, NbTi.

6. Cooling stage (1) according to any of claims 4 or 5, wherein the first heat switch (3) comprises a complementary coil (33) configured to generate the magnetic field trapped by the superconducting tube (322).

7. Cooling stage (1) according to any one of the previous claims, wherein the refrigerant (2) comprises a bundle of wires (22) of magnetocaloric material or plates of magnetocaloric material, the channel piece (31) of the first heat switch (3) being at least one of the wires or the plates from said bundle of the refrigerant, extending out of said bundle.

8. Cooling stage (1) according to the previous claim, wherein the said at least one wire or plate extending out of said bundle comprises a bend with a portion perpendicular to the direction of the magnetic field applied by the magnetic device (32) of the first heat switch (3).

9. Cooling stage (1) according to any one of the previous claims, wherein the magnetic device (32) is also configured to compensate the magnetic field generated by the main coil (5) on the channel piece (31) of the first heat switch (3).

10. Cooling stage (1) according to any one of the previous claims, wherein the channel piece (31) of the first heat switch (3) is thermally coupled to a pre-cooling system (7), said pre-cooling system (7) being preferably configured to provide a temperature below 20 mK.

11. Nuclear-demagnetization refrigerator comprising at least a first cooling stage (1) according to any of the claims 1 to 10 and a second cooling stage (1) according to any of the claims 1 to 10, the first and second cooling stages (1) being thermally coupled in series.

12. Continuous nuclear-demagnetization refrigerator (8) comprising at least a first cooling stage (1) according to any of the claims 1 to 10 and a second cooling stage (1) according to any of the claims 1 to 10, the first and second cooling stages (1) being thermally coupled in parallel.

13. Continuous nuclear-demagnetization refrigerator (8) according to the previous claim, comprising a sample holder (6) and a pre-cooling stage (7), the first heat switch (3) of the first cooling stage (1a) being thermally coupled to the precooling stage (7), the second heat switch (4) of the first cooling stage (1a) being thermally coupled to the sample holder (6), the first heat switch (3) of the second cooling stage (1b) being thermally coupled to the precooling stage (7), the second heat switch (4) of the second cooling stage (1b) being thermally coupled to the sample holder (6).

14. Use (9) of a continuous nuclear-demagnetization refrigerator (8) according to the previous claim for cooling down the sample holder (6) of the continuous nuclear-demagnetization refrigerator.

15. Use (9) according to the previous claim, starting from an initial state (91) wherein the refrigerant (2) of the first cooling stage (1a) is:
• thermally uncoupled from the precooling stage (7) by the first heat switch (3) of the first cooling stage (1a); and
• thermally coupled to the sample holder (6) by the second heat switch (4) of the first cooling stage (1a),
and wherein the refrigerant (2) of the second cooling stage (1b) is:
• thermally coupled to the precooling stage (7) by the first heat switch (3) of the second cooling stage (1b); and
• thermally uncoupled from the sample holder (6) by the second heat switch (4) of the second cooling stage (1b),
comprising:
• while performing a nuclear demagnetization of the refrigerant (2) of the first cooling stage (1a) using the main coil (5) of the first cooling stage (1a):
• thermally uncoupling (92) the refrigerant (2) of the second cooling stage (1b) from the precooling stage (7) using the first heat switch (3) of the second cooling stage (1b); and
• thermally coupling (93) the refrigerant (2) of the second cooling stage (1b) to the sampler holder (6) using the second heat switch (4) of the second cooling stage (1b);
• while performing a nuclear demagnetization of the refrigerant (2) of the second cooling stage (1b) using the main coil (5) of the second cooling stage (1b):
• thermally uncoupling (94) the refrigerant (2) of the first cooling stage (1a) from the sample holder (6) using the second heat switch (4) of the first cooling stage (1a);
• thermally coupling (95) the refrigerant (2) of the first cooling stage (1a) to the precooling stage (7) using the first heat switch (3) of the first cooling stage (1a).
